Europäisches Patentamt

European Patent Office

Office européen des brevets

(11) Numéro de publication : **0 319 359 B1**

# (12) FASCICULE DE BREVET EUROPEEN

(45) Date de publication du fascicule du brevet :
**21.08.91 Bulletin 91/34**

(51) Int. Cl.⁵ : **B60T 13/52**

(21) Numéro de dépôt : **88402838.2**

(22) Date de dépôt : **14.11.88**

(54) Servomoteur d'assistance au freinage.

(30) Priorité : **01.12.87 FR 8716618**

(43) Date de publication de la demande :
**07.06.89 Bulletin 89/23**

(45) Mention de la délivrance du brevet :
**21.08.91 Bulletin 91/34**

(84) Etats contractants désignés :
**DE ES FR GB IT**

(56) Documents cités :
**FR-A- 1 505 226**
**FR-A- 2 225 319**
**GB-A- 1 281 596**
**GB-A- 2 132 720**

(73) Titulaire : **BENDIX EUROPE Services
Techniques S.A.
126 rue de Stalingrad
F-93700 Drancy (FR)**

(72) Inventeur : **Meynier, Guy
58-60 rue de Reims
F-93600 Aulnay sous Bois (FR)**

(74) Mandataire : **Lejet, Christian
Bendix Europe Service Techniques Service
Brevets 126 rue de Stalingrad
F-93700 Drancy (FR)**

## Description

L'invention concerne un servomoteur d'assistance au freinage et s'applique avantageusement à tous les véhicules automobiles dont le circuit de freinage est équipé d'un tel servomoteur.

La conception des véhicules modernes conduit, notamment pour améliorer leur aérodynamisme, à réaliser des capots de plus en plus plongeants, alors que le nombre des appareils présents sous les capots tend plutôt à s'accroître. Pour cette raison, les constructeurs automobiles imposent des dimensions maximales à certains de ces appareils. En particulier, le diamètre extérieur des servomoteurs d'assistance au freinage est généralement limité à une certaine valeur par les constructeurs automobiles.

Afin d'obtenir une force d'assistance au freinage suffisamment élevée, notamment sur les véhicules rapides, les constructeurs de servomoteurs d'assistance au freinage ont donc été amenés à concevoir des servomoteurs à deux étages présentant une section efficace accrue, sans que le diamètre extérieur du servomoteur soit augmenté. A titre d'illustration, un tel servomoteur est décrit dans le document GB-A-1157861.

Comme l'illustre ce dernier document, ces servomoteurs à deux étages sont habituellement réalisés en mettant bout à bout deux chambres d'assistance approximativement de même diamètre. La limitation du diamètre du servomoteur conduit alors à accroître sa longueur, ce qui n'est parfois pas admis par le constructeur.

De plus, la paroi avant de l'enveloppe des servomoteurs d'assistance au freinage est habituellement doublée par une plaque de renforcement. Le nombre de plaques constituant l'ossature d'un servomoteur à deux étages et le nombre de liaisons étanches entre ces plaques sont donc élevés, ce qui pénalise à la fois le temps de fabrication et le coût de ces servomoteurs.

C'est ainsi qu'il à déjà été proposé, dans le document GB-A-2132720 (correspondant au préambule de la revendication 1), de réaliser un servomoteur à deux étages, en disposant un servomoteur à l'intérieur de l'autre. Un tel servomoteur comprend deux pistons disposés coaxialement, chacun étant soumis à une différence de pression s'exerçant sur le diaphragme qui lui est associé, l'un des diaphragmes ayant une surface efficace supérieure à celle de l'autre. Lorsque les pistons sont dans leur position extrême de fonctionnement, le diaphragme de plus petit diamètre est partiellement emboîté dans celui de plus grand diamètre sur une longueur donnée, ce qui permet de réduire la longueur axiale du servomoteur à deux étages de cette longueur donnée, et donc corrélativement le volume total du servomoteur, pour une même force d'assistance.

Néanmoins, ce servomoteur présente de nombreux inconvénients inhérents à sa conception en tandem. Cette conception est analogue à celle des servomoteurs à deux étages où les deux chambres d'assistance sont mises bout à bout. En effet, les deux pistons sont disposés bout à bout et sont rappelés dans leur position de repos par un ressort disposé dans la chambre avant du deuxième servomoteur, ce ressort agissant sur le deuxième piston qui à son tour agit sur le premier piston, lui-même agissant sur la tige d'actionnement reliée à la pédale de frein. Appliquée à un servomoteur où les chambres d'assistance sont emboîtées, cette conception conduit inévitablement à une réduction de la course des pistons, et donc des tiges de commande et de poussée, ce qui est incompatible avec certaines conditions de fonctionnement sévère.

De plus, avec la disposition des pistons bout à bout, le disque de réaction, en position de repos, est constamment soumis à la contrainte du ressort de rappel principal, et lors du fonctionnement, il ne transmet les efforts qu'entre le premier piston et la tige de sortie et est insensible à l'action du second piston. Pour remédier à cet inconvénient, il est alors nécessaire de surdimensionner le plongeur et donc la valve de commande.

La présente invention a précisément pour objet un servomoteur d'assistance au freinage à deux étages, dont la conception particulière lui permet d'obtenir une force d'assistance accrue pour un diamètre et une longueur du servomoteur pratiquement identiques à ceux d'un servomoteur à un seul étage, la valve de commande ainsi que la course des moyens de commande et de sortie étant identiques à celles d'un servomoteur à un seul étage.

Conformément à l'invention, ce résultat est obtenu au moyen d'un servomoteur d'assistance au freinage, comprenant une enveloppe extérieure, une plaque de renforcement fixée intérieurement à une partie avant de l'enveloppe, et comportant un prolongement approximativement cylindrique et orienté vers l'arrière à l'intérieur de l'enveloppe, et une cloison rigide supportée à l'intérieur de l'enveloppe par la plaque de renforcement fixée de façon étanche à l'extrémité de ce prolongement pour délimiter à l'intérieur de ladite enveloppe un volume avant et un volume arrière, un piston traversant la cloison rigide de façon étanche, deux cloisons déformables divisant chacun des volumes avant et arrière en une chambre avant et une chambre arrière, au moins un passage reliant les deux chambres avant, au moins un passage reliant les deux chambres arrière, et un ressort hélicoïdal tendant à déplacer les cloisons déformables vers leur position de repos arrière, caractérisé en ce que les deux cloisons déformables sont fixées par leur bord périphérique intérieur sur le même piston, et en ce que le ressort hélicoïdal est logé dans la chambre avant du volume arrière, autour du prolongement approximativement cylindrique de la plaque de renforcement.

Grâce à cet agencement particulier, les volumes avant et arrière assurant une assistance au freinage accrue sont placés à l'intérieur d'une enveloppe dont les dimensions extérieures sont identiques à celles d'un servomoteur à un seul étage. De plus, le servomoteur selon l'invention utilise une valve de commande identique à celle des servomoteurs à un seul étage, de telle sorte que le coût est diminué et sa fabrication facilitée par rapport aux servomoteurs à deux étages existants.

Deux modes de réalisation de l'invention vont maintenant être décrits, à titre d'exemples nullement limitatifs, en se référant aux dessins annexés dans lesquels :

— la figure 1 est une vue de côté, en coupe longitudinale, représentant la moitié inférieure d'un servomoteur d'assistance au freinage réalisé conformément à un premier mode de réalisation de l'invention, et

— la figure 2 est une vue comparable à la figure 1 illustrant un deuxième mode de réalisation de l'invention.

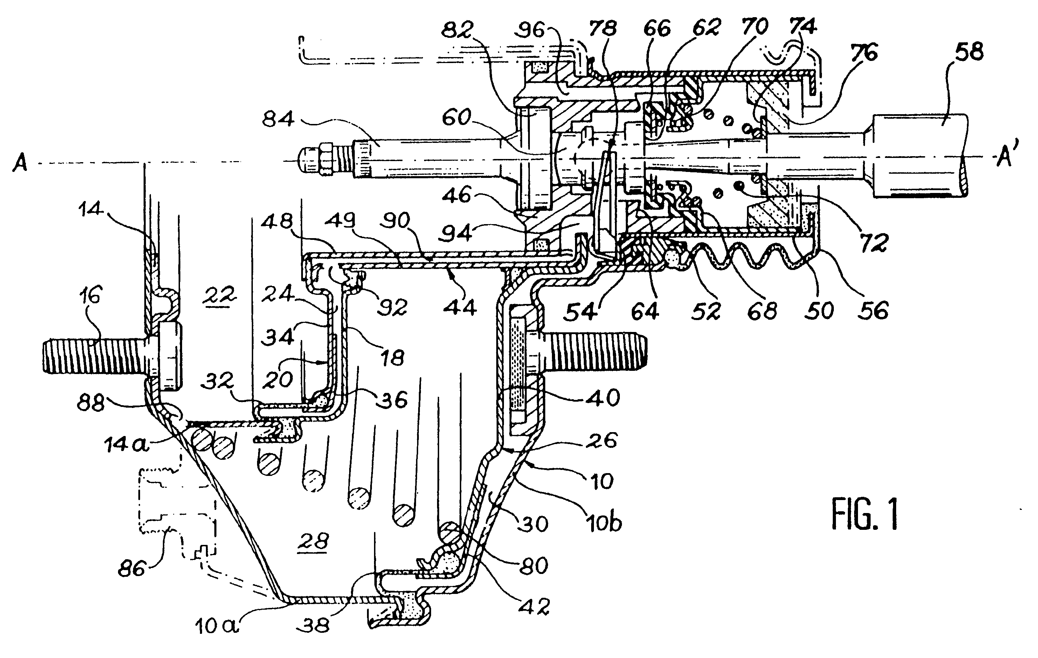

La figure 1 représente une partie d'un servomoteur d'assistance au freinage prévu pour être placé de façon habituelle entre la pédale de frein d'un véhicule et le maître-cylindre commandant le circuit de freinage hydraulique. Par convention, on appelle avant du servomoteur la partie de ce dernier tournée vers ce maître-cylindre et située sur la gauche de la figure et arrière du servomoteur la partie tournée vers la pédale de frein et située sur la droite de la figure.

Le servomoteur de la figure 1 comprend une enveloppe extérieure 10 en forme de coquille, présentant une symétrie de révolution autour d'un axe A-A'. Cette enveloppe 10 est formée de deux plaques ou tôles embouties 10a et 10b serties l'une sur l'autre à leur périphérie.

De manière en elle-même connue, la tôle 10a formant l'avant de l'enveloppe 10 du servomoteur est renforcée dans sa partie avant sensiblement plane et perpendiculaire à l'axe A-A' par une plaque de renforcement 14. Cette plaque 14 est placée à l'intérieur de l'enveloppe 10 et elle est fixée sur la partie avant de la tôle 10a et sur une pièce (non représentée) assurant le supportage du maître-cylindre par des vis réparties circonférentiellement (généralement deux) et dont l'une est représentée en 16 sur la figure 1.

La plaque de renforcement 14 comporte un prolongement 14a approximativement cylindrique, orienté vers l'arrière à l'intérieur de l'enveloppe 10. Le diamètre de ce prolongement 14a est sensiblement inférieur au diamètre extérieur de l'enveloppe 10, de telle sorte qu'un espace annulaire est formé entre les deux. L'extrémité avant d'une cloison rigide 18 est fixée par sertissage sur l'extrémité arrière du prolongement 14a de la plaque de renforcement 14. Cette cloison 18 comprend une partie arrière, approximativement plane et perpendiculaire à l'axe A-A', située à peu près à mi-distance entre les extrémités avant et arrière de l'enveloppe 10.

La cloison 18, prolongée vers l'avant par le prolongement 14a de la plaque de renforcement 14, délimite ainsi, à l'intérieur de l'enveloppe 10, un volume avant et un volume arrière. Chacun de ces deux volumes est divisé en une chambre avant et une chambre arrière par une cloison déformable approximativement perpendiculaire à l'axe A-A'.

De façon plus précise, une première cloison déformable 20 divise le volume avant délimité à l'intérieur de la plaque de renforcement 14 et de la cloison 18 en une chambre avant 22 et une chambre arrière 24. De façon comparable, une deuxième cloison déformable 26 divise le volume arrière délimité entre l'enveloppe 10 et la cloison 18 en une chambre avant 28 et une chambre arrière 30.

Dans sa partie périphérique, la première cloison déformable 20 comprend une membrane souple 32, en élastomère, dont le bord périphérique extérieur forme un bourrelet emprisonné entre les bords sertis de la cloison 18 et du prolongement 14a de la plaque de renforcement 14. Le bord périphérique intérieur de la membrane souple 32 est également terminé par un bourrelet maintenu sur une gorge formée à la périphérie extérieure d'un disque support métallique 34 par une plaque 36. La première cloison déformable 20 est ainsi constituée de la membrane souple 32, la plaque 36 et le disque support 34.

De façon comparable, la partie extérieure de la deuxième cloison déformable 26 est constituée par une membrane souple 38, en élastomère, comportant à sa périphérie extérieure un bourrelet emprisonné lors du sertissage des tôles 10a et 10b de l'enveloppe. La membrane souple 38 est également délimitée intérieurement par un bourrelet reçu sur une gorge formée à la périphérie extérieure d'un disque support métallique 40 et maintenu dans cette gorge par une plaque 42. La deuxième paroi déformable est ainsi constituée de la membrane souple 38, la plaque 42 et le disque support 40.

Conformément à l'invention, les cloisons déformables 20 et 26 sont fixées par les bords périphériques intérieurs de leurs disques supports, 34 et 40 respectivement, de façon étanche sur un piston 44 centré sur l'axe A-A' du servomoteur et apte à se déplacer selon cet axe. Plus précisément, le piston 44 comprend une pièce massive creuse 46 sur laquelle sont fixés deux tubes coaxiaux 48 et 49 faisant saillie vers l'avant et un tube coaxial 50 faisant saillie vers l'arrière.

Le bord périphérique intérieur du disque métallique 34 est emprisonné entre les extrémités avant, recourbées radialement vers l'extérieur, des tubes 48 et 49. De façon comparable, le bord périphérique intérieur du disque métallique 40 est emprisonné entre l'extrémité avant, recourbée radialement vers l'extérieur, du tube 50 et l'extrémité arrière, recourbée radialement vers l'intérieur, du tube 49. L'extrémité arrière du tube 49 est elle-même en appui contre un épaulement formé sur la surface périphérique extérieure de la pièce massive 46. Les tubes 48, 49 et 50 sont immobilisés sur la pièce massive 46 par une partie du tube 50 proche de son extrémité avant, sertie dans une gorge formée sur la surface périphérique extérieure de la pièce massive 46.

Le piston 44 traverse de façon étanche un passage central formé dans la tôle 10b constituant l'arrière de l'enveloppe du servomoteur. Ce passage central est délimité par une partie centrale tubulaire de la tôle 10b, qui fait saillie vers l'arrière et dans laquelle est emprisonnée une bague 52. A son extrémité avant, la bague 52 porte un joint d'étanchéité annulaire 54 qui est à la fois en contact étanche avec la partie centrale tubulaire de la tôle 10b et avec la surface extérieure du tube 50.

Un soufflet d'étanchéité 56 est également interposé entre la bague 52 et l'extrémité arrière du tube 50, afin d'éviter que des poussières ne se déposent sur la surface de ce dernier. Ce soufflet d'étanchéité 56 comporte à son extrémité avant un bourrelet reçu dans une gorge formée sur la bague 52 et son extrémité arrière est emboîtée sur l'extrémité arrière, recourbée radialement vers l'intérieur, du tube 50.

De façon connue, la commande du servomoteur est assurée par une tige de commande 58 disposée selon l'axe A-A' et dont l'extrémité arrière est actionnée par la pédale de frein du véhicule (non représentée). L'extrémité avant de la tige 58 est en appui sur un plongeur 60 qui coulisse dans un alésage central formé dans la pièce massive 46.

L'extrémité arrière du plongeur 60, ainsi qu'un épaulement tourné vers l'arrière formé dans l'alésage central de la pièce massive 46 constituent deux sièges de valve désignés respectivement par les références 62 et 64 sur la figure 1.

Un clapet annulaire 66 est logé entre la tige de commande 58 et la pièce massive 46, de façon à pouvoir venir en appui avec les sièges de valve 62 et 64. Ce clapet 66 est formé à l'extrémité d'un manchon en élastomère dont l'extrémité opposée forme un bourrelet qui est emprisonné entre l'extrémité arrière de la pièce massive 46 et une coupelle 68 garnissant intérieurement le tube 50. Un ressort de compression 70 est interposé entre la coupelle 68 et le clapet 66 pour appliquer ce dernier contre l'un au moins des sièges de valve 62 et 64.

Un second ressort de compression 72 est emprisonné entre la coupelle 68 et une rondelle 74 qui est en appui sur un épaulement tourné vers l'avant, formé sur la tige de commande 58. Le ressort 72 maintient normalement la rondelle 74 en appui contre un filtre à air 76 logé dans le tube 50, autour de la tige de commande 58.

Un système de butées 78 monté dans le plongeur 60 détermine la position arrière de repos du piston 44, ainsi que la course du plongeur 60 à l'intérieur du piston 44.

Conformément à l'invention, un ressort de compression 80 est logé dans la chambre avant 28 du volume arrière du servomoteur, et maintient normalement la cloison déformable 26 dans sa position arrière de repos déterminée par la venue en appui du système de butées 78 contre le joint d'étanchéité 54. La cloison déformable 26 étant fixée au piston 44, sur lequel est fixée la cloison déformable 20, ces trois éléments sont simultanément rappelés dans leur position arrière de repos par le ressort 80, la cloison déformable 26 étant poussée directement par le ressort 80, la cloison déformable 20 étant tirée par le piston 44.

Dans l'ensemble de réalisation représenté sur la figure 1, le ressort de compression 80 est un ressort hélicoïdal tronçonique dont l'extrémité de plus grand diamètre prend appui sur le disque métallique 40, à proximité de sa périphérie extérieure, et dont l'extrémité de plus petit diamètre prend appui dans l'angle formé entre le prolongement cylindrique 14a de la plaque de renforcement 14 et une zone tronçonique de la partie avant 10a de l'enveloppe 10. Ce ressort 80 entoure ainsi en partie le prolongement cylindrique 14a.

D'une manière connue, un disque de réaction 82 en un matériau élastomère est placé dans la partie avant de plus grand diamètre de l'alésage central formé dans la pièce massive 46, à une faible distance de l'extrémité du plongeur 60. Le disque de réaction 82 est en appui sur l'extrémité arrière d'une tige de sortie 84 du servomoteur, dont l'extrémité avant actionne le piston d'un maître-cylindre (non représenté).

Dans les conditions normales de fonctionnement du servomoteur, la chambre avant 28 du servomoteur est reliée à une source de vide au moyen d'un embout 86 représenté en traits mixtes sur la figure 1. Pour que le vide soit également fait dans la chambre avant 22, les volumes 22 et 28 communiquent entre eux par un ou plusieurs trous 88 formés dans le prolongement cylindrique 14a de la plaque de renforcement 14, dans la partie avant de ce prolongement.

Par ailleurs, les chambres arrière 24 et 30 des volumes avant et arrière délimités par la cloison 18 communiquent également entre elles par un passage. Ce passage comprend un passage annulaire 90 délimité entre les deux tubes concentriques 48, 49, et qui communique avec la chambre arrière 24 par un ou plusieurs trous 92 formés dans le tube extérieur et avec la chambre arrière 30 par un passage 94 formé dans la pièce massive 46.

Le fonctionnement du servomoteur qui vient d'être décrit en se référant à la figure 1 est classique et ne sera pas décrit en détail.

On rappellera simplement ici que lorsque la pédale de frein n'est pas actionnée, le clapet 66 est en appui sur le siège de valve 62 et écarté du siège de valve 64. Dans ces conditions, des passages (non représentés) formés dans la pièce massive 46 font communiquer la chambre avant 22 avec les chambres arrière 24 et 30. Etant donné que les chambres avant 22 et 28 communiquent entre elles, toutes les chambres du servomoteur sont alors sous vide et le piston 44 est maintenu en position arrière de repos sous l'action du ressort 80.

Lorsque la pédale de frein est actionnée, la tige de commande 58 se déplace vers l'avant ainsi que le plongeur 60. Sous l'effet de ce mouvement, le clapet 66 vient en appui sur le siège 64 et se trouve éloigné du siège de valve 62. Dans ces conditions, la communication entre la chambre avant 22 et les chambres arrière 24 et 30 est interrompue et ces dernières sont mises en communication avec l'atmosphère extérieure au travers du filtre à air 76. La pression atmosphérique introduite dans les chambres arrière 24 et 30 exerce sur les cloisons déformables 20 et 26 une force supérieure à la force exercée par le ressort 80, de telle sorte que le piston 44 se déplace vers l'avant en entraînant la tige 84. Un actionnement assisté du frein est ainsi réalisé.

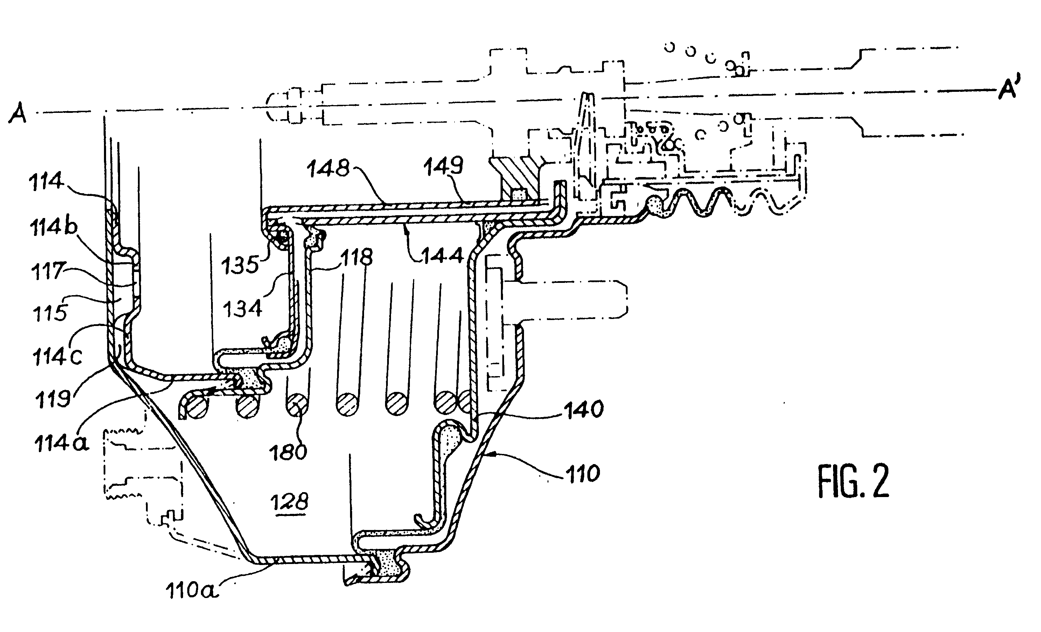

La figure 2 représente un deuxième mode de réalisation du servomoteur selon l'invention. Les caractéristiques essentielles du servomoteur qui vient d'être décrit en détail en se référant à la figure 1 se retrouvent sur la figure 2, de sorte qu'il ne sera pas fait de description détaillée de cette dernière figure. Au contraire, seules les caractéristiques de ce deuxième mode de réalisation qui diffèrent de celles du premier mode de réalisation vont maintenant être décrites.

Pour faciliter la compréhension, les éléments comparables à ceux du premier mode de réalisation sont désignés par les mêmes chiffres de référence augmentés de 100.

L'une des principales différences entre le mode de réalisation de la figure 2 et le mode de réalisation précédemment décrit en se référant à la figure 1 concerne la communication entre les chambres avant 122 et 128 des volumes avant et arrière délimités par la cloison 118 à l'intérieur de l'enveloppe 110 du servomoteur.

D'une manière en elle-même classique, la partie avant sensiblement plane et perpendiculaire à l'axe A-A' de la plaque de renforcement 114 comprend une nervure annulaire 114b délimitant avec la partie avant sensiblement plane de la tôle 110a de l'enveloppe une chambre annulaire 115 qui communique avec la chambre 122 par au moins un trou 117 formé dans la nervure annulaire 114b. Cette chambre annulaire 115 communique par ailleurs avec la chambre 128 par un ou plusieurs espaces 119 délimités entre des nervures 114c formées par exemple radialement dans la plaque de renforcement 114 et la partie avant sensiblement plane de la tôle 110a.

Le mode de réalisation de la figure 2 se distingue aussi du mode de réalisation de la figure 1 par la forme et la disposition du ressort 180.

Sur la figure 2, le ressort de compression 180 est un ressort hélicoïdal cylindrique dont une extrémité est en appui sur une partie plane et perpendiculaire à l'axe A-A' du disque métallique 140 et dont l'extrémité opposée est en appui sur l'extrémité avant, recourbée radialement vers l'extérieur, de la cloison 118. Comme précédemment, le ressort 180 entoure en partie le prolongement cylindrique 114a de la plaque de renforcement 114.

Dans le mode de réalisation de la figure 2, la forme de la plaque métallique 140 est par ailleurs légèrement différente de celle du disque 40 sur la figure 1, ce qui permet notamment de supprimer la plaque 42.

Une autre différence entre les deux modes de réalisation concerne la fixation du disque 134 sur les tubes 148 et 149 du piston 144. Dans le cas de la figure 2, le disque 134 comprend une partie centrale tubulaire, repliée vers l'avant autour du tube extérieur 149, et le tube intérieur 148 comprend une extrémité repliée et sertie par laquelle un joint torique 135 est emprisonné entre ce tube et le disque 134.

## Revendications

1. Servomoteur d'assistance au freinage, comprenant une enveloppe extérieure (10, 110), une plaque de renforcement (14, 114) fixée intérieurement à une partie avant de l'enveloppe, et comportant un prolongement (14a, 114a) approximativement cylindrique et orienté vers l'arrière à l'intérieur de l'enveloppe, et une cloison rigide (18, 118) supportée à l'intérieur de l'enveloppe (10, 110) par la plaque de renforcement (14, 114) fixée de façon étanche à l'extrémité de ce prolongement pour délimiter à l'intérieur de ladite enveloppe un volume avant et un volume arrière, un piston (44, 144) traversant la cloison rigide de façon étanche, deux cloisons déformables (20, 26) divisant chacun des volumes avant et arrière en une chambre avant (22, 28, 122, 128) et une chambre arrière (24, 30), au moins un passage (88, 117, 115, 119) reliant les deux chambres avant, au moins un passage (92, 90, 94) reliant les deux chambres arrière, et un ressort hélicoïdal (80, 180) tendant à déplacer les cloisons déformables vers leur position de repos en arrière, caractérisé en ce que les deux cloisons déformables (20, 26) sont fixées par leur bord périphérique intérieur sur le même piston (44, 144), et en ce que le ressort hélicoïdal (80, 180) est logé dans la chambre avant (28, 128) du volume arrière, autour du prolongement (14a, 114a) approximativement cylindrique de la plaque de renforcement (14, 114).

2. Servomoteur selon la revendication 1, caractérisé en ce que ledit ressort hélicoïdal affecte une forme troncônique (80).

3. Servomoteur selon la revendication 1, caractérisé en ce que ledit ressort hélicoïdal affecte une forme cylindrique (180).

4. Servomoteur selon l'une quelconque des revendications précédentes, caractérisé par le fait que la cloison rigide (18, 118) est fixé à l'extrémité du prolongement (14a, 114a) de la plaque de renforcement par sertissage, en emprisonnant un bourrelet périphérique formé sur la cloison déformable (20) logée dans le volume avant.

5. Servomoteur selon l'une quelconque des revendications précédentes, caractérisé par le fait que la plaque de renforcement (114) comporte une nervure annulaire de renforcement (114b) délimitant avec une partie adjacente de l'enveloppe (110) une chambre annulaire (115), le passage reliant les deux chambres avant comprenant ladite chambre annulaire qui communique avec la chambre avant (122) du volume avant par au moins un trou formé dans la nervure annulaire (114b) et avec la chambre avant (128) du volume arrière par au moins un espace (119) délimité entre une autre nervure (114c) formée dans la plaque de renforcement et ladite partie adjacente de l'enveloppe.

**Patentansprüche**

1. Bremshilfe-Servomotor, mit einem Außengehäuse (10, 110), einer Verstärkungsplatte (14, 114), die im Inneren an einem vorderen Teil des Gehäuses befestigt ist und eine annähernd zylindrische und zur Rückseite des Gehäuseinneren gerichtete Verlängerung (14a, 114a) und eine im Inneren des Gehäuses (10, 110) durch die auf dichte Weise am Ende dieser Verlängerung befestigte Verstärkungsplatte (14, 114) gehaltene starre Zwischenwand (18, 118) zur Abgrenzung eines vorderen Volumens und eines hinteren Volumens im Inneren des Gehäuses aufweist, einem Kolben (44, 144), der auf dichte Weise durch die starre Zwischenwand hindurchgeht, zwei verformbaren Zwischenwänden (20, 26), die sowohl das vordere als auch das hintere Volumen jeweils in eine vordere Kammer (22, 28, 122, 128) und eine hintere Kammer (24, 30) unterteilt, wenigstens einem Durchlaß (88, 117, 115, 119), der die zwei vorderen Kammern verbindet, wenigstens einem Durchlaß (92, 90, 94), der die zwei hinteren Kammern verbindet, und einer Schraubenfeder (80, 180), die so gespannt ist, daß sie die verformbaren Zwischenwände in ihre hinten befindliche rückwärtige Position verschiebt, dadurch gekennzeichnet, daß die zwei verformbaren Zwischenwände (20, 26) mit ihrer inneren Umfangskante am selben Kolben (44, 144) befestigt sind und daß die Schraubenfeder (80, 180) in der vorderen Kammer (28, 128) des hinteren Volumens um die annähernd zylindrische Verlängerung (14a, 114a) der Verstärkungsplatte (14, 114) angeordnet ist.

2. Servomotor gemäß Anspruch 1, dadurch gekennzeichnet, daß die Schraubenfeder eine kegelstumpfartige Form (80) annimmt.

3. Servomotor gemäß Anspruch 1, dadurch gekennzeichnet, daß die Schraubenfeder eine zylindrische Form (180) annimmt.

4. Servomotor gemäß einem der vorangehenden Ansprüche, dadurch gekennzeichnet, daß die starre Zwischenwand (18, 118) am Ende der Verlängerung (14a, 114a) der Verstärkungsplatte durch Quetschverbindung befestigt ist, wobei eine periphere Wulst eingeschlossen wird, die an der im vorderen Volumen angeordneten verformbaren Zwischenwand (20) ausgebildet ist.

5. Servomotor gemäß einem der vorangehenden Ansprüche, dadurch gekennzeichnet, daß die Verstärkungsplatte (114) eine ringförmige Verstärkungsrippe (114b) umfaßt, die mit einem angrenzenden Teil des Gehäuses (110) eine ringförmige Kammer (115) abgrenzt, wobei der die zwei vorderen Kammern verbindende Durchlaß eine ringförmige Kammer enthält, die mit der vorderen Kammer (122) des vorderen Volumens durch wenigstens ein in der ringförmigen Rippe (114b) ausgebildetes Loch und mit der vorderen Kammer (128) des hinteren Volumens durch wenigstens einen zwischen einer in der Verstärkungsplatte ausgebildeten anderen Rippe (114c) und dem angrenzenden Teil des Gehäuses eingeschlossenen Raum (119) in Verbindung steht.

**Claims**

1. Brake servo unit, comprising an outer casing (10, 110), a reinforcing plate (14, 114) fastened internally to a front part of the casing, and comprising an extension (14a, 114a) which is approximately cylindrical and oriented towards the rear within the casing, and a rigid partition (18, 118) supported within the casing (10, 110) by the reinforcing plate (14, 114) fixed sealingly to the end of this extension to delimit a front space and a rear space inside the said casing, a piston (44, 144) passing sealingly through the rigid partition, two deformable partitions (20, 26) dividing each of the front and rear spaces into a front chamber (22, 28, 122, 128) and a rear chamber (24, 30), at least one passage (88, 117, 115, 119) connecting the two front chambers, at least one passage (92, 90, 94) connecting the two rear chambers, and a helical spring (80, 180) tending to displace the deformable partitions towards their rear rest position, characterized in that the two deformable partitions (20, 26) are fastened by their internal peripheral edge onto the same piston (44, 144), and in that the helical spring (80, 180) is received in the front chamber (28, 128) of the rear space, around the approximately cylindrical extension (14a, 114a) of the reinforcing plate (14, 114).

2. Servo unit according to Claim 1, characterized in that the said helical spring exhibits a frustoconical shape (80).

3. Servo unit according to Claim 1, characterized in that the said helical spring exhibits a cylindrical shape (180).

4. Servo unit according to any one of the preceding claims, characterized in that the rigid partition (18, 118) is fastened to the end of the extension (14a, 114a) of the reinforcing plate by crimping, capturing a peripheral bead formed on the deformable partition (20) received in the front space.

5. Servo unit according to any one of the preceding claims, characterized in that the reinforcing plate (114) comprises an annular reinforcing rib (114b) delimiting together with an adjacent part of the casing (110) an annular chamber (115), the passage connecting the two front chambers comprising the said annular chamber which communicates with the front chamber (122) of the front space by at least one hole formed in the annular rib (114b) and with the front chamber (128) of the rear space by at least one space (119) delimited between another rib (114c) formed in the reinforcing plate and the said adjacent part of the casing.

FIG. 1

EP 0 319 359 B1

FIG. 2